# EUROPEAN PATENT SPECIFICATION

(11) **EP 3 355 038 B1**
(45) Date of publication and mention of the grant of the patent: **08.09.2021**
(21) Application number: 17152984.5
(22) Date of filing: 25.01.2017
(51) Int. Cl.: G01J 3/28, G01J 3/02, G02B 21/00, G02B 21/24, G02B 21/36

(54) **IMAGING APPARATUS AND OPERATING METHOD**
BILDGEBUNGSVORRICHTUNG UND BETRIEBSVERFAHREN
IMAGEUR ET PROCÉDÉ DE FONCTIONNEMENT

(43) Date of publication of application: 01.08.2018
(73) Proprietor: Specim, Spectral Imaging Oy Ltd, 90590 Oulu (FI)
(72) Inventor: Puusaari, Jarkko, 90590 Oulu (FI)
(74) Representative: Kolster Oy Ab

(56) References cited:
- EP-A1- 1 914 787
- EP-A2- 1 586 931
- WO-A2-01/84209
- JP-A- 2006 314 774
- JP-A- 2007 327 891

## Description

### Field

The invention relates to an imaging apparatus and an operating method.

### Background

To perform a focusing operation such that an image or a photograph is reliably in focus is challenging when capturing a strip-like image the shape of which is mainly one-dimensional. For example, in strip-photography a 2-dimensional image is formed by capturing a plurality of 1-dimensional images in sequence. Another example relates to hyperspectral imaging where a target may be line-scanned through a slit of a spectrograph in order to provide images one after another. The slit which has a shape of a narrow rectangle provides images which are 1-dimensional in a practical sense. These ways of imaging may be called single-line imaging techniques or push-broom imaging techniques.

There are two main reasons why focusing is challenging when using single-line imaging techniques. One-dimensional image is not easily interpretable because it typically has few recognizable features. Another reason is that particularly hyperspectral cameras use a large aperture in order to collect as much light as possible. The large aperture, in turn, causes the depth of focus to be very narrow and the focus is not easily found when performing the focusing operation.

In the prior art, the problem mainly related to the difficulty to interpret the one-dimensional image has been attempted to cure by attaching a high-contrast object on or in the place of the actual target in order to provide a sharp and easily recognizable change of intensity in the slit-shaped image.

In the prior art, a target may also be line-scanned. When a full image of the target is formed from a plurality of line-scanned images, it can be determined whether the image is in focus or not. Patent document WO 01/84209 presents a fully automatic rapid microscope slide scanner. Patent document EP 1586931 presents a slit confocal microscope and method. Patent document JP 2007327891 presents a visual inspection system.

However, both of these methods are slow and often not possible. Hence, there is a need to improve the operation related to focusing of single-line imaging.

### Brief description

The present invention seeks to provide an improvement in the single-line imaging. According to an aspect of the present invention, there is provided an imaging apparatus as specified in claim 1.

According to another aspect of the present invention, there is provided an operating method in claim 12.

The invention has advantages. With the help of a two-dimensional imaging in addition to the single-line imaging it is possible adjust the single-line image in focus in an easy manner.

### List of drawings

Example embodiments of the present invention are described below, by way of example only, with reference to the accompanying drawings, in which
Figure 1 illustrates an example of an imaging apparatus;
Figure 2A illustrates an example of an imaging apparatus which has a two-dimensional detector and a single-line detector which move sideways with respect to an optical axis of optical radiation they receive, and the two-dimensional detector is receiving the optical radiation;
Figure 2B illustrates an example of the imaging apparatus of Figure 2A where the two-dimensional detector and the single-line detector are in another position;
Figures 3A and 3B illustrate an example of the imaging apparatus not falling within the scope of the claimed invention which has a mirror for directing the optical radiation to the two-dimensional detector and the single-line detector in turns, and the movement of the two-dimensional detector may be used for scanning;
Figure 3C illustrates an example of the imaging apparatus the mirror of which is moved for scanning;
Figures 4A and 4B illustrate an example of the imaging apparatus not falling within the scope of the claimed invention which has a prism for directing the optical radiation to the two-dimensional detector and the single-line detector in turns, and the movement of the two-dimensional detector may be used for scanning;
Figure 4C illustrates an example of the imaging apparatus the prism of which is moved for scanning;
Figure 5 illustrates an example of the imaging apparatus not falling within the scope of the claimed invention which has a beam splitter for directing the optical radiation to the two-dimensional detector and the single-line detector simultaneously, and the movement of the two-dimensional detector and/or the movement of the beam splitter may be used for scanning;
Figure 6 illustrates an example of a spectrograph;
Figure 7 illustrates an example of the imaging apparatus which has a relay-lens arrangement;
Figure 8 illustrates an example of a controller; and
Figure 9 illustrates of an example of a flow chart of an operating method.

### Description of embodiments

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

It should be noted that while Figures illustrate various embodiments, they are simplified diagrams that only show some structures and/or functional entities. The connections shown in the Figures may refer to logical or physical connections. It is apparent to a person skilled in the art that the described apparatus may also comprise other functions and structures than those described in Figures and text. It should be appreciated that details of some functions, structures, and the signalling used for the operation and/or controlling are irrelevant to the actual invention. Therefore, they need not be discussed in more detail here.

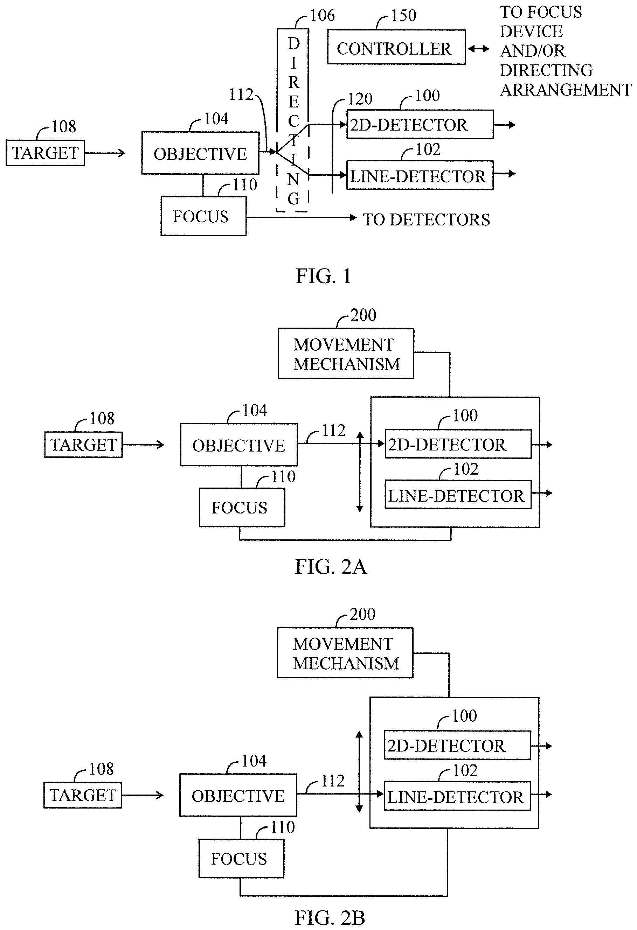

Figure 1 illustrates an example of an imaging apparatus. The imaging apparatus may be portable. The imaging apparatus may be a hand held electric device which may be like a system camera (a digital single-lens reflex camera) or a pocket camera. The apparatus comprises a first detector 100 which captures a two-dimensional image. The first detector 100 has a pixel matrix sensor which has a plurality of pixel rows and a plurality of pixel column. The pixel matrix sensor may comprise a charge-coupled device element or complementary metal oxide semiconductor element, for example. In an embodiment, the apparatus may be a microscopic device. In an embodiment, the apparatus may be an industrial device which is large and heavy such that it is not a hand-held device or a device portable by one person only.

The apparatus also comprises a second detector 102 which performs single-line imaging performed in line-scanning or push-broom imaging. The single-line imaging refers to imaging where a captured image of a target 108 is like a line. That is, the image has a shape of a narrow rectangle and may be considered as a stripe-image. The image of the shape of the narrow rectangle can be considered to be one dimensional. However, although the image is like a single line, the second detector 102 may have a semiconductor sensor element which is two-dimensional. Only the image is limited to be like a single line. The image carries information of the shape of the target 108. The two-dimensional sensor element may be used to detect spectrum of the target 108 in another dimension. The spectrum is detected from the same area of the target 108 as the single-line image. The second detector 102 may comprise a line-scan camera, for example.

For example, an image of a line-scan camera is a single line. At successive moments, the line-scan camera may capture additional single line images from the target 108 or from a section of the target 108. Then the single line images may be assembled into a two dimensional image or the single line images may be processed as such by a computer. The line-scan camera may be used for inspection of products, for example.

The first detector 100 and the second detector 102 are spatially displaced from each other.

The apparatus also comprises an objective 104 which is common to the first detector 100 and the second detector 102. The objective 104 may comprise one or more lenses. The objective 104 may additionally or alternatively comprise at least one concave or convex mirror and/or other optical component. The objective 104 is located at the same optical distance from the first detector 100 and the second detector 102. In this manner, the objective 104 provides its image plane 120 at an equal distance from the first detector 100 and the second detector 102 when optical radiation 112 from the objective 104 is directed to them.

The apparatus additionally comprises a directing arrangement 106 which directs, simultaneously or in turns, the optical radiation 112 from the common objective 104 to the first detector 100 and the second detector 102. Here, simultaneous means that the directing occurs at the same time. In turns refers to the fact that the directing doesn't occur at the same time but at separate moments.

The apparatus further comprises a focus device 110 which is also common to the first detector 100 and the second detector 102. The focus device 110 may adjust the back focal length of the objective 104 for making the image in the first detector 100 to be in focus. The back focal length may be adjusted, for example, by: changing a refraction index of at least on lens in the objective 104; changing curvature of at least one lens or mirror in the objective 104; or changing mutual positions of at least two lenses, two mirrors and/or a lens and a mirror in the objective 104. Alternatively or additionally, the focus device 110 may adjust the distance between the first detector 100 and the common objective 104 for making the image in the first detector 100 to be in focus.

The focus device 110 performs a focusing operation for finding a focus for the first detector 100. The focusing operation may be performed manually or automatically. Because the image plane 120 is located equally for both the first detector 100 and the second detector 102, the optical radiation from the objective 104 is also in focus for the second detector 102. The second detector 102 the captures a single-line image on the basis of the optical radiation directed thereto. The single-line image of the second detector 102 may also be called an one-dimensional image.

In other words, the focus device 110 performs a focusing operation for finding a focusing state, where the two-dimensional image captured by the first detector 100 is in focus. The second detector 102 then captures a line-image or strip-image using said focusing state with the optical radiation directed thereto by the directing arrangement 106. The focusing state is the state of the apparatus where a position of the image plane 120 and a position of the first detector 100 are adjusted such that an image of the target 108 is in focus in the first detector 100. And when the image is in focus in the first detector 100, the image is also in focus in the second detector 102. The focusing operation requires similar manual or automatic actions as a normal focusing operation of a prior art optical device. That is why the focusing operation and finding the focus don't require knowledge which goes beyond the prior art, *per se.*

Information about the focusing state, where the two-dimensional image captured by the first detector 100 is in focus, may be received from a common focus device 110 to a controller 150 which then commands the second detector 102 to capture the single-line image, and may additionally command, if necessary, the directing arrangement 106 to direct the optical radiation to the second detector 102 for the image capture. The controller 150 may have a user interface for presenting information and/or images. The interface may also have a touch screen and/or a keyboard for inputting information to be associated with the image data. Additionally or alternatively, the input information may be used to control the image capturing by the apparatus.

In an embodiment an example of which is shown in Figures 2A, 2B, 3C, and 4C the directing arrangement 106 may comprise a detector movement mechanism 200 which moves at least one of the following: the first detector 100 and the second detector 102 to the optical radiation 112 in turns.

In an embodiment, the movement mechanism 200 may move both the first detector 100 and the second detector 102. The movement mechanism 200 of the directing arrangement 106 may direct the optical radiation 112 to the first detector 100 and the second detector 102 in turns by moving the first detector 100 and the second detector 102 to the optical radiation 112 alternatively.

Figures 2A and 2B illustrates an example of an embodiment where the first detector 100 and the second detector 102 can be moved in a perpendicular direction to the optical axis of the incoming optical radiation. In this embodiment, the first detector 100 and the second detector 102 may be physically separated from each other in a direction perpendicular to the optical axis of the optical radiation output by the objective 104 towards the first and second detectors 100, 102.

In Figure 2A, the first detector 100 is moved to a position where the optical radiation 112 from the common objective 104 hits the first detector 100. Then the image in the first detector 100 is adjusted by the focus device 110 such that the image is in focus.

After focusing, the second detector 102 captures at least one image through a slit for having a single-line image which is in focus on the basis of the focusing operation made by the focusing device 110 for the first detector 100. If a line-scanning is performed, the movement mechanism 200 may move the second detector 102 over the image of the target 108 or over a desired section of the image of the target 108 for forming a two-dimensional image of the target 108 or the desired section of the target 108.

The optical distance between the first detector 100 and the common objective 104 may be the same as the distance between the second detector 100 and the common objective 104 when the first detector 100 and the second detector 102 are located in a position for receiving the optical radiation 112 from the common objective 104.

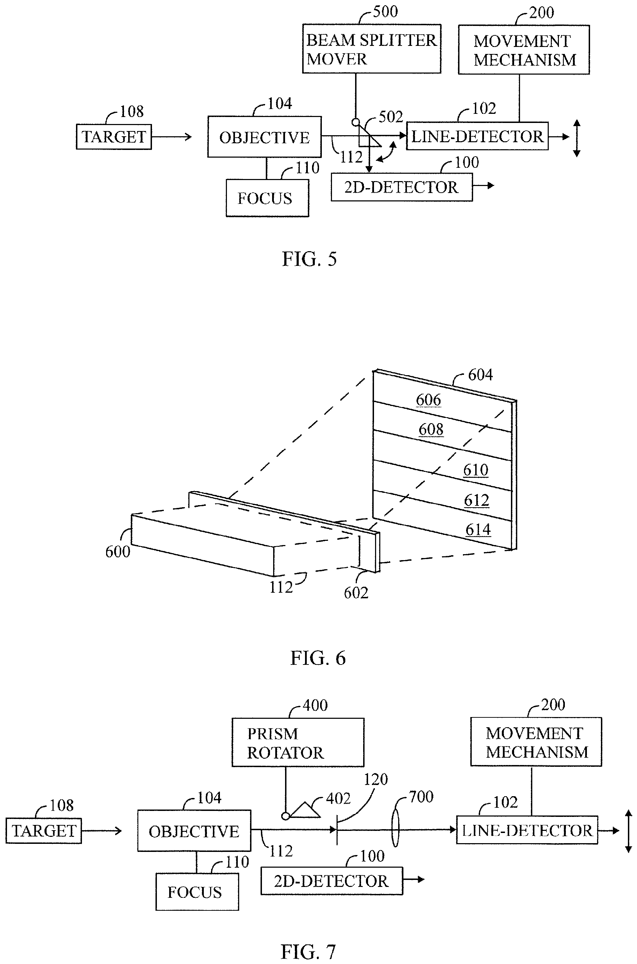

In an embodiment, the detector movement mechanism 200 may move the second detector 102 in a perpendicular direction to the optical axis of the optical radiation received by the second detector 102, the longitudinal axis of the second detector 102 being perpendicular to both the direction of the movement and the optical axis. The longitudinal axis of the second detector 102 may be a longitudinal axis of a slit 600 (see Figure 6) in the second detector 102.

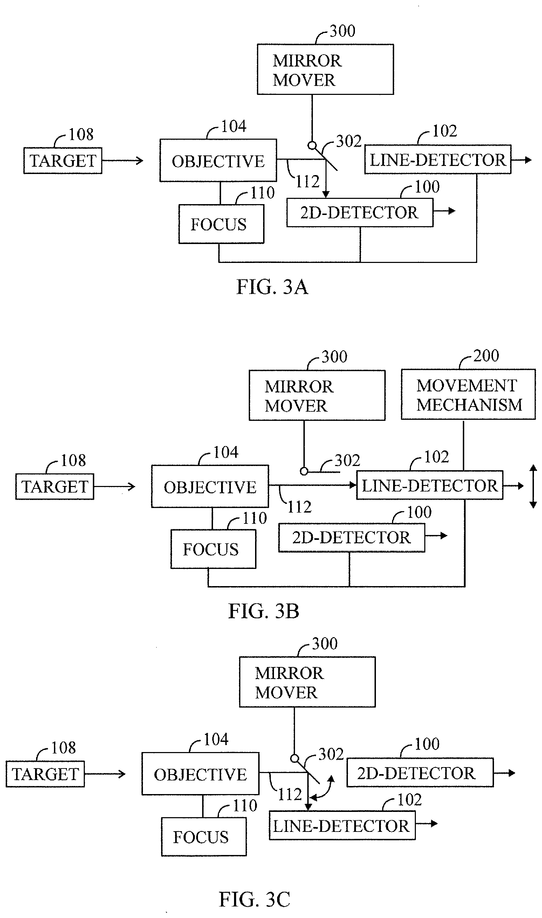

Figures 3A and 3B illustrate an example not falling within the scope of the appended set of claims, where the directing arrangement 106 may comprise a reflector 302 and a reflector mover 300. In an embodiment shown in Figures 3A and 3B, the reflector 302 comprises a mirror. In Figure 3A, the mirror mover 300 has rotated the mirror 302 in a position in which the mirror 302 reflects the optical radiation 112 to the first detector 100 for the focusing operation.

In Figure 3B, the mirror mover 300 has rotated the mirror 302 in a position in which the mirror 302 reflects the optical radiation 112 to the second detector 102. The mirror mover 300 may thus direct the optical radiation to the first direction and the second direction alternatively, the first direction being towards the first detector 100 and the second direction being towards the second detector 102.

The second detector 102 may be moved back and forth by the detector movement mechanism 200 in order to perform scanning the optical radiation over the second detector 102. In this manner, the second detector 102 may scan over the image of the target 108 or a desired section of the image of the target 108.

In an embodiment an example of which illustrated in Figure 3C, the mirror mover 300 may rotate the mirror 302 back and forth in order to perform scanning the optical radiation over the second detector 102. Alternatively or additionally, the mirror mover 300 may linearly move the mirror 302 up and down. In this manner, the second detector 102 may scan over the image of the target 108 or a desired section of the image of the target 108. The mirror mover 300 may be an electric motor with or without a gear mechanism or a pneumatic or hydraulic system. The mirror mover 300 may be controlled by the controller 150 to move the mirror 302.

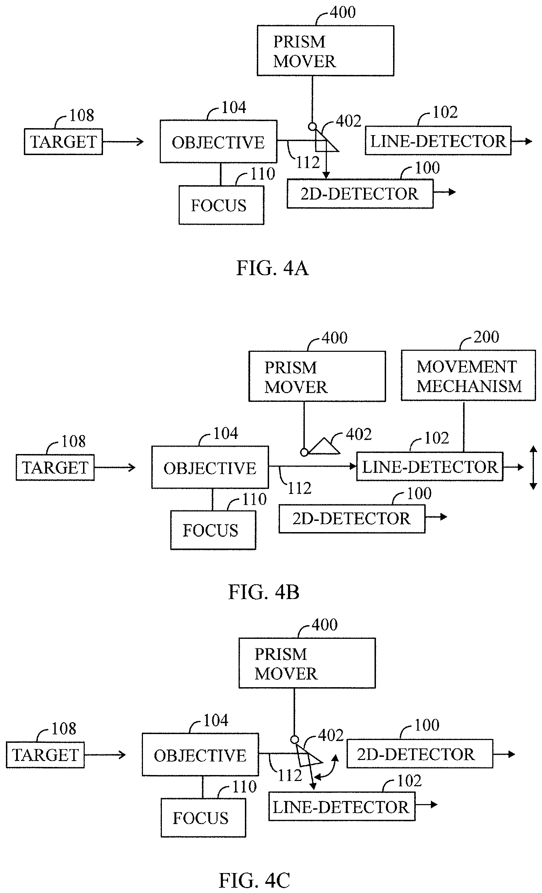

Figures 4A and 4B illustrate an example not within the scope of the appended set of claims, where the reflector 302 may comprise a prism and the reflector mover 300 may comprise a prism mover 400. In Figure 4A, the prism mover 400 has rotated the prism 402 in a position in which the prism 402 reflects the optical radiation 112 to the first detector 100 for the focusing operation.

In Figure 4B, the prism mover 400 has rotated the prism 402 in a position in which the prism 402 reflects the optical radiation 112 to the second detector 102. The prism mover 400 may thus direct the optical radiation to the first direction and the second direction alternatively, the first direction being towards the first detector 100 and the second direction being towards the second detector 102.

The second detector 102 may be moved back and forth by the detector movement mechanism 200 in order to perform scanning the optical radiation over the second detector 102. In this manner, the second detector 102 may scan over the image of the target 108 or a desired section of the image of the target 108.

In an embodiment an example of which illustrated in Figure 4C, the prism mover 400 may rotate the prism 402 back and forth in order to perform scanning the optical radiation over the second detector 102. Alternatively or additionally, the prism mover 400 may linearly move the prism 402 up and down. In this manner, the second detector 102 may scan over the image of the target 108 or a desired section of the image of the target 108. The prism mover 400 may be similar to the mirror mover 300. The prism mover 400 may be controlled by the controller 150 to move the prism 402.

Thus in general, the detector movement mechanism 200 may move the second detector 102 for scanning the optical radiation over the second detector 102.

In an embodiment the directing arrangement 106 comprises a beam splitter 502. The beam splitter 502 may split the optical radiation 112 to the first direction and to the second direction simultaneously, the first direction being towards the first detector 100 and the second direction being towards the second detector 102. The image in the first detector 100 is adjusted by the focus device 110 such that the image is in focus. After the focusing, the second detector 102 captures at least one image through a slit for having a single-line image which is in focus on the basis of the focusing operation made by the focusing device 110 for the first detector 100. For performing a line-scanning operation, the beam splitter 502 is linearly moved or rotated by a beam splitter mover 500.

Thus, in an embodiment, the directing arrangement 106 comprises a beam splitter mover 500, which moves the beam splitter 502 for scanning the optical radiation over the second detector 102.

In an embodiment, the beam splitter 502 may be prism-like beam splitter or a partially transparent mirror which at least mostly reflects the part of the optical radiation which doesn't pass through the mirror.

In an example not falling under the scope of the claimed invention, the first detector 100 may be stationary. The first direction to which the beam splitter 502 splits one beam of the optical radiation 112 may be towards the stationary first detector 100. The second direction to which the beam splitter 502 splits another beam of the optical radiation 112 may be towards a movement range of the second detector 102 moved by the detector movement mechanism 200.

In an embodiment, the common focus device 110 may perform the focusing operation by changing the distance between the common objective 104 and the first and the second detectors 100, 102. In an embodiment, the common focus device 110 may perform the focusing operation by changing a back focal length of the objective 104. In an embodiment, the common focus device 110 may perform the focusing operation by both changing the distance between the common objective 104 and the first and the second detectors 100, 102 and changing a back focal length of the objective 104.

According to the invention which is illustrated in Figure 6, the second detector 102 comprises a spectrograph. The spectrograph has a dispersing component 602 which disperses optical radiation 112 received through the slit 600 into physically separate wavelengths of spectrum on the sensor element 604 of the second detector 102. The spectrum, in turn, is electromagnetic radiation having the wavelength range from about 50 nm to about 1mm in vacuum on the earth. The spectrum can be detected as separate optical bands 606, 608, 610, 612 and 614. The center wavelength, bandwidth and the number of optical bands 606 to 614 may be selected in a desired manner. The spectrograph may have a prism or a diffraction grating as the dispersing component 602 for dispersing the optical radiation 112.

According to the invention, the common focus device 110 forms an image plane of the common objective 104 on the slit 600 of the spectrograph in response to the focusing state where the two-dimensional image of the first detector 100 is in focus. In this manner, electromagnetic radiation from a narrow strip of the target 108 is detected by the sensor element 604 using the separate optical bands 606, 608, 610, 612 and 614, the narrow strip being formed by the slit 600. By scanning over the target 108 or a section of the target 108, the scanned strips may be used to form a hyperspectral image of the target 108 or the section of the target 108. Thus, the hyperspectral image has a spatial dimension and a spectral dimension. How to form the hyperspectral image from the separate optical bands 606, 608, 610, 612 and 614, *per se,* is known by the person in the art.

In an embodiment the second detector 102 may comprise at least one relay lens arrangement 700 between the common objective 104 and the second detector 102. In an embodiment, the at least one relay lens arrangement 700 may reside between the common objective 104 and the slit 600 of the second detector 102.

In an embodiment, the first detector 100 may comprise at least one relay lens arrangement between the common objective 104 and the first detector 100 in a manner similar to what is illustrated in Figure 7 for the second detector 102.

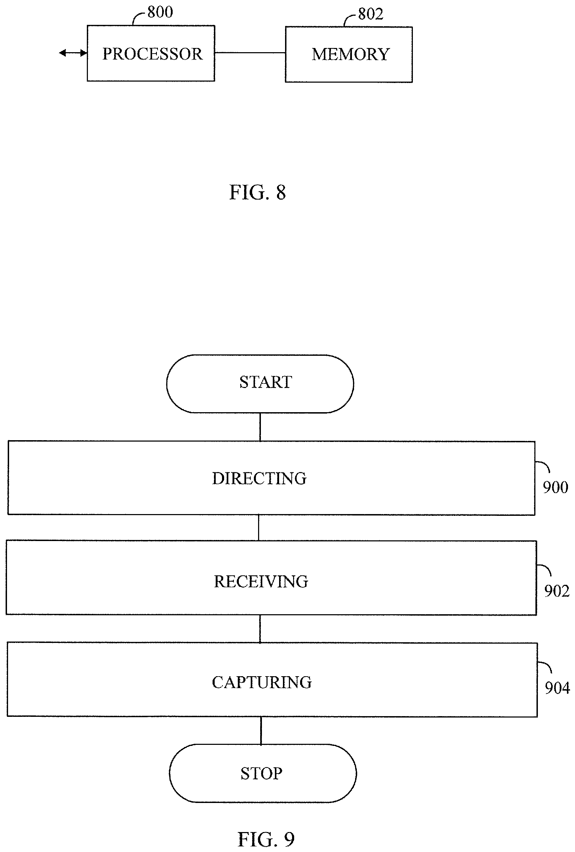

In an embodiment an example of which is shown in Figure 8, the controller 150 (see Figure 1) may comprise one or more processors 800 and one or more memories 802 including computer program code. The one or more memories 802 and the computer program code with the one or more processors 800 may cause the controller 150 at least to control the focus device 110 and/or the directing arrangement 106 to perform their actions. The controller 150 may also receive information from the focus device 110 and/or the directing arrangement 106 for performing data processing and outputting its commands for controlling the focus device 110 and/or the directing arrangement 106 to perform their actions.

The first detector 100 sees the same solid angle or target 108 as the second detector 102 because both detectors 100, 102 have the same objective 104 with the same magnification. The first detector 100 may be used to measure the optical power received by the objective 104. The measured optical power may, in turn, be used to estimate the exposure time for the second detector 102. The controller 150 may perform the estimation of the exposure time and also control the actual exposure. On the other hand, the exposure may be performed manually on the basis of the estimated exposure time.

Figure 9 is a flow chart of the measurement method. In step 900, optical radiation 112 from a common objective 104 to a first detector 100 and a second detector 102 are directed 900 by a directing arrangement 106 simultaneously or in turns, the common objective 104 being common to the first detector 100 and the second detector 102 and being located at the same optical distance from the first detector 100 and the second detector 102, the first detector 100 capturing a two-dimensional image, and the second detector 102 performing single-line imaging and being spatially displaced with respect with the first detector 100. In step 902, information about a focusing state, where the two-dimensional image captured by the first detector 100 is in focus, is received from a common focus device 110 to the first detector 100 and the second detector 102. In step 904, a single-line image is captured by the second detector 102 on the basis of the optical radiation directed thereto using said focusing state.

The method shown in Figure 9 may be implemented as a logic circuit solution or computer program. The computer program may be placed on a computer program distribution means for the distribution thereof. The computer program distribution means is readable by a data processing device, and it encodes the computer program commands, carries out the measurements and optionally controls the processes on the basis of the measurements.

The computer program may be distributed using a distribution medium which may be any medium readable by the controller. The medium may be a program storage medium, a memory, a software distribution package, or a compressed software package. In some cases, the distribution may be performed using at least one of the following: a near field communication signal, a short distance signal, and a telecommunications signal.

It will be obvious to a person skilled in the art that, as technology advances, the inventive concept can be implemented in various ways. The invention and its embodiments are not limited to the example embodiments described above but may vary within the scope of the claims.

## Claims

1. A hyperspectral imaging apparatus comprising
a first detector (100) configured to capture a two-dimensional image,
a second detector (102) configured to perform single-line imaging and spatially displaced with respect to the first detector (100), and
an objective (104), which is common to the first detector (100) and the second detector (102), being located at the same optical distance from the first detector (100) and the second detector (102), **characterized in that**
the second detector (102) comprises a spectrograph;
the imaging apparatus further comprises
a common focus device (110), common to the first detector (100) and the second detector (102), configured to perform a focusing operation for finding a focusing state and to form an image plane (120) of the common objective (104) on a slit (600) of the spectrograph in response to the focusing state where the two-dimensional image of the first detector (100) is in focus;
a directing arrangement (106) configured to direct optical radiation (112) from the common objective (104) to the first detector (100) and the second detector (102);
the directing arrangement (106) comprises at least one of the following for forming a hyperspectral image by scanning the optical radiation over the second detector (102) directed thereto:
a detector movement mechanism (200) configured to move both the first detector (100) and the second detector (102), direct the optical radiation (112) to the second detector (102) and move the second detector (102) for performing line-scanning; and
both a reflector (302, 402) and a reflector mover (300, 400) configured to rotate or move linearly the reflector (302, 402) that is configured to reflect the optical radiation (112) to the second detector (102) where the two-dimensional image captured by the first detector (100) is in focus, and the second detector (102) being configured to perform single-line imaging for the hyperspectral image on the basis of the optical radiation directed thereto with said focusing state.

2. The imaging apparatus of claim 1, wherein the detector movement mechanism (200) is configured to move the second detector (102) in a perpendicular direction to the optical axis of the optical radiation received by the second detector (102), the longitudinal axis of an aperture of the second detector (102) being perpendicular to both the direction of the movement and the optical axis.

3. The imaging apparatus of claim 1, or 2, wherein the directing arrangement (106) comprises a beam splitter (502) configured to split the optical radiation to the first direction and to the second direction simultaneously, the first direction being for the first detector (100) and the second direction being for the second detector (102).

4. The imaging apparatus of claim 3, wherein the directing arrangement (106) comprises a beam splitter mover (500), the beam splitter mover (500) being configured move the beam splitter (502) for scanning the optical radiation over the second detector (102).

5. The imaging apparatus of claim 1, or 2, wherein the directing arrangement (106) comprises a reflector (302) and a reflector mover (300), the reflector mover (300) being configured to direct the optical radiation to the first direction and the second direction alternatively, the first direction being for the first detector (100) and the second direction being for the second detector (102).

6. The imaging apparatus of claim 5, wherein the reflector mover (300) being configured to scan the optical radiation over the second detector (102).

7. The imaging apparatus of claim 3, wherein the first direction being towards the first detector (100), which is stationary, and the second direction being towards a movement range of the second detector (102) moved by the detector movement mechanism (200).

8. The imaging apparatus of claim 1, wherein the detector movement mechanism (200) is configured to move both the first detector (100) and the second detector (102), and to direct the optical radiation to the first detector (100) and the second detector (102) in turns by moving the first detector (100) and the second detector (102) to the optical radiation alternatively.

9. The imaging apparatus of claim 1, wherein the common focus device (110) being configured to perform at least one of the following for performing the focusing operation: change the distance between the common objective (104) and the first and the second detectors (100, 102), and change a back focal length of the objective (104).

10. The imaging apparatus of claim 1, wherein the second detector (102) comprises at least one relay lens arrangement (700) between the common objective (104) and at least one of the following: the first detector (100) and the second detector (102).

11. The imaging apparatus of claim 1, wherein
the apparatus comprises a
one or more processors (800); and
one or more memories (802) including computer program code;
the one or more memories (802) and the computer program code configured to, with the one or more processors (800), cause apparatus at least to:
direct, by a directing arrangement (106) simultaneously or in turns, optical radiation (112) from the common objective (104) to the first detector (100) and the second detector (102);
receive, from a common focus device (110) to the first detector (100) and the second detector (102), information about a focusing state, where the two-dimensional image captured by the first detector (100) is in focus, and
capture, by the second detector (102), a single-line image on the basis of the optical radiation directed thereto using said focusing state.

12. An operating method of a hyperspectral imaging apparatus, the method comprising
directing (900), by a directing arrangement (106), optical radiation (112) from a common objective (104) to a first detector (100) and a second detector (102), the common objective (104) being common to the first detector (100) and the second detector (102) and being located at the same optical distance from the first detector (100) and the second detector (102), the first detector (100) capturing a two-dimensional image, and the second detector (102) performing single-line imaging and being spatially displaced with respect with the first detector (100), **characterized by**
performing a focusing operation for finding a focusing state and forming an image plane (120) of the common objective (104) on a slit (600) of the spectrograph in response to the focusing state, where the two-dimensional image of the first detector (100) is in focus, with a focus device (110) common to the first detector (100) and the second detector (102);
receiving (902), from a focus device (110) common to the first detector (100) and the second detector (102), information about a focusing state, where the two-dimensional image captured by the first detector (100) in focus for a hyperspectral image,
forming the hyperspectral image by scanning the optical radiation over the second detector (102) directed thereto by at least one of the following: a detector movement mechanism (200) moving both the first detector (100) and the second detector (102), directing the optical radiation (112) to the second detector (102) and moving the second detector (102) for performing line-scanning, a reflector mover (300, 400) rotating or moving linearly a reflector (302, 402) that reflects optical radiation to the second detector (102),
and
performing (904), by the second detector (102), the single-line imaging for the hyperspectral image on the basis of the optical radiation directed thereto using said focusing state.

## Patentansprüche

1. Vorrichtung zur hyperspektralen Bildgebung, umfassend:
einen ersten Detektor (100), der für die Aufnahme eines zweidimensionalen Bildes konfiguriert ist,
einen zweiten Detektor (102), der für Durchführung von Einzellinien-Bildgebung konfiguriert und in Bezug auf den ersten Detektor (100) räumlich verschoben ist, und
ein Objektiv (104), das dem ersten Detektor (100) und dem zweiten Detektor (102) gemeinsam ist und sich in demselben optischen Abstand von dem ersten Detektor (100) und dem zweiten Detektor (102) befindet,
**dadurch gekennzeichnet, dass**
der zweite Detektor (102) einen Spektrograf umfasst;
wobei die Bildgebungsvorrichtung weiter umfasst:
eine gemeinsame Fokussiervorrichtung (110), die dem ersten Detektor (100) und dem zweiten Detektor (102) gemeinsam ist und konfiguriert ist für die Durchführung eines Fokussiervorgangs zur Ermittlung eines Fokussierzustands und für die Bildung einer Bildebene (120) des gemeinsamen Objektivs (104) auf einem Spalt (600) des Spektrografen als Reaktion auf den Fokussierzustand, bei dem das zweidimensionale Bild des ersten Detektors (100) fokussiert ist;
eine Lenkungsanordnung (106), die dafür konfiguriert ist, die optische Strahlung (112) von dem gemeinsamen Objektiv (104) zu dem ersten Detektor (100) und zu dem zweiten Detektor (102) zu lenken;
wobei die Lenkungsanordnung (106) mindestens eines der folgenden Merkmale aufweist, um durch Abtastung der optischen Strahlung über den zweiten Detektor (102), die darauf gerichtet ist, ein hyperspektrales Bild zu erzeugen:
einen Detektorbewegungsmechanismus (200), welcher dafür konfiguriert ist, sowohl den ersten Detektor (100) als auch den zweiten Detektor (102) zu bewegen, die optische Strahlung (112) auf den zweiten Detektor (102) zu lenken und den zweiten Detektor (102) zur Durchführung einer Zeilenabtastung zu bewegen; und
sowohl einen Reflektor (302, 402) als auch einen Reflektorbeweger (300, 400), der dafür konfiguriert ist, den Reflektor (302, 402), der dafür konfiguriert ist, die optische Strahlung (112) zu dem zweiten Detektor (102) zu reflektieren, wo das zweidimensionale Bild, das von dem ersten Detektor (100) aufgenommen wurde, fokussiert ist, zu drehen oder linear zu bewegen, und wobei der zweite Detektor (102) dafür konfiguriert ist, eine Einzellinien-Bildgebung für das hyperspektrale Bild auf der Grundlage der darauf gerichteten optischen Strahlung mit dem Fokussierzustand durchzuführen.

2. Bildgebungsvorrichtung nach Anspruch 1, wobei der Detektorbewegungsmechanismus (200) dafür konfiguriert ist, den zweiten Detektor (102) senkrecht zur optischen Achse der von dem zweiten Detektor (102) empfangenen optischen Strahlung zu bewegen, wobei die Längsachse einer Apertur des zweiten Detektors (102) senkrecht zu der Bewegungsrichtung und zu der optischen Achse steht.

3. Bildgebungsvorrichtung nach Anspruch 1 oder 2, wobei die Lenkungsanordnung (106) einen Strahlteiler (502) umfasst, der dafür konfiguriert ist, die optische Strahlung gleichzeitig in die erste Richtung und in die zweite Richtung aufzuteilen, wobei die erste Richtung für den ersten Detektor (100) und die zweite Richtung für den zweiten Detektor (102) gilt.

4. Bildgebungsvorrichtung nach Anspruch 3, wobei die Lenkungsanordnung (106) einen Strahlteilerbeweger (500) umfasst, wobei der Strahlteilerbeweger (500) dafür konfiguriert ist, den Strahlteiler (502) zur Abtastung der optischen Strahlung über den zweiten Detektor (102) zu bewegen.

5. Bildgebungsvorrichtung nach Anspruch 1 oder 2, wobei die Lenkungsanordnung (106) einen Reflektor (302) und einen Reflektorbeweger (300) umfasst, wobei der Reflektorbeweger (300) dafür konfiguriert ist, die optische Strahlung abwechselnd in die erste Richtung und in die zweite Richtung zu lenken, wobei die erste Richtung für den ersten Detektor (100) und die zweite Richtung für den zweiten Detektor (102) gilt.

6. Bildgebungsvorrichtung nach Anspruch 5, wobei der Reflektorbeweger (300) dafür konfiguriert ist, die optische Strahlung über dem zweiten Detektor (102) abzutasten.

7. Bildgebungsvorrichtung nach Anspruch 3, wobei die erste Richtung zu dem ersten Detektor (100) hin geht, welcher stationär ist, und die zweite Richtung zu einem Bewegungsbereich des zweiten Detektors (102) hin geht, welcher durch den Detektorbewegungsmechanismus (200) bewegt wird.

8. Bildgebungsvorrichtung nach Anspruch 1, wobei der Detektorbewegungsmechanismus (200) dafür konfiguriert ist, sowohl den ersten Detektor (100) als auch den zweiten Detektor (102) zu bewegen und die optische Strahlung abwechselnd auf den ersten Detektor (100) und den zweiten Detektor (102) zu richten, indem der erste Detektor (100) und der zweite Detektor (102) abwechselnd in Richtung der optischen Strahlung bewegt werden.

9. Bildgebungsvorrichtung nach Anspruch 1, wobei die gemeinsame Fokussiervorrichtung (110) dafür konfiguriert ist, mindestens eine der folgenden Aktionen zur Durchführung des Fokussiervorgangs durchzuführen: Ändern des Abstands zwischen dem gemeinsamen Objektiv (104) und dem ersten und dem zweiten Detektor (100, 102) und Ändern einer hinteren Schnittweite des Objektivs (104).

10. Bildgebungsvorrichtung nach Anspruch 1, wobei der zweite Detektor (102) mindestens eine Relaisoptikanordnung (700) zwischen dem gemeinsamen Objektiv (104) und mindestens einem der folgenden umfasst: dem ersten Detektor (100) und dem zweiten Detektor (102).

11. Bildgebungsvorrichtung nach Anspruch 1, wobei die Vorrichtung umfasst:
einen oder mehrere Prozessoren (800); und
einen oder mehrere Speicher (802) einschließlich Computerprogrammcode;
wobei der eine oder mehrere Speicher (802) und der Computerprogrammcode dafür konfiguriert sind, mit dem einen oder mehreren Prozessoren (800), die Vorrichtung zu veranlassen zum:
Lenken, durch eine Lenkungsanordnung (106), gleichzeitig oder abwechselnd, von optischer Strahlung (112) von dem gemeinsamen Objektiv (104) zu dem ersten Detektor (100) und zu dem zweiten Detektor (102);
Empfangen, von einer gemeinsamen Fokussiervorrichtung (110) an dem ersten Detektor (100) und an dem zweiten Detektor (102), von Informationen über einen Fokussierzustand, bei dem das von dem ersten Detektor (100) aufgenommene zweidimensionale Bild fokussiert ist, und
Aufnehmen, durch den zweiten Detektor (102), eines einzeiligen Bildes auf der Grundlage der darauf gerichteten optischen Strahlung unter Verwendung des Fokussierzustands.

12. Betriebsverfahren einer Vorrichtung zur hyperspektralen Bildgebung, wobei das Verfahren umfasst:
Lenken (900), durch eine Lenkungsanordnung (106), der optischen Strahlung (112) von einem gemeinsamen Objektiv (104) auf einen ersten Detektor (100) und einen zweiten Detektor (102), wobei das gemeinsame Objektiv (104) dem ersten Detektor (100) und dem zweiten Detektor (102) gemeinsam ist und sich im gleichen optischen Abstand von dem ersten Detektor (100) und dem zweiten Detektor (102) befindet, wobei der erste Detektor (100) ein zweidimensionales Bild aufnimmt und der zweite Detektor (102) eine Einzellinien-Bildgebung durchführt und räumlich gegenüber dem ersten Detektor (100) verschoben ist, **gekennzeichnet durch**
Durchführen eines Fokussiervorgangs zur Ermittlung eines Fokussierzustands und zur Bildung einer Bildebene (120) des gemeinsamen Objektivs (104) auf einem Spalt (600) des Spektrografen als Reaktion auf den Fokussierzustand, bei dem das zweidimensionale Bild des ersten Detektors (100) fokussiert ist, mit einer Fokussiervorrichtung (110), die dem ersten Detektor (100) und dem zweiten Detektor (102) gemeinsam ist;
Empfangen (902), von einer dem ersten Detektor (100) und dem zweiten Detektor (102) gemeinsamen Fokussiervorrichtung (110), von Informationen über einen Fokussierzustand, bei dem das von dem ersten Detektor (100) aufgenommene zweidimensionale Bild für ein hyperspektrales Bild fokussiert ist,
Bilden des hyperspektralen Bildes durch Abtastung der optischen Strahlung über dem zweiten Detektor (102), der von mindestens einem der folgenden darauf gerichtet ist: ein Detektorbewegungsmechanismus (200), der sowohl den ersten Detektor (100) als auch den zweiten Detektor (102) bewegt, die optische Strahlung (112) auf den zweiten Detektor (102) lenkt und den zweiten Detektor (102) für die Durchführung von Zeilenabtastung bewegt, einen Reflektorbeweger (300, 400), der einen Reflektor (302, 402) dreht oder linear bewegt, welcher die optische Strahlung auf den zweiten Detektor (102) reflektiert, und
Durchführen (904), durch den zweiten Detektor (102), der Einzellinien-Bildgebung für das hyperspektrale Bild auf der Grundlage der darauf gerichteten optischen Strahlung unter Verwendung des Fokussierzustandes.

## Revendications

1. Imageur hyperspectral qui comprend
un premier détecteur (100) configuré pour capturer une image en deux dimensions,
un second détecteur (102) configuré pour effectuer une imagerie sur une seule ligne et déplacé spatialement par rapport au premier détecteur (100), et
un objectif (104), qui est commun au premier détecteur (100) et au second détecteur (102), qui se trouve à la même distance optique du premier détecteur (100) et du second détecteur (102), **caractérisé en ce que**
le second détecteur (102) comprend un spectrographe ;
dans lequel l'imageur comprend en outre :
un dispositif de mise au point commun (110), commun au premier détecteur (100) et au second détecteur (102), configuré pour effectuer une opération de mise au point destinée à trouver un état de mise au point et pour former un plan d'image (120) de l'objectif commun (104) sur une fente (600) du spectrographe en réponse à l'état de mise au point dans lequel l'image en deux dimensions du premier détecteur (100) est mise au point ;
un ensemble d'orientation (106) configuré pour orienter le rayonnement optique (112) qui provient de l'objectif commun (104) vers le premier détecteur (100) et le second détecteur (102) ;
dans lequel l'ensemble d'orientation (106) comprend au moins l'un de ce qui suit pour former une image hyperspectrale en balayant le rayonnement optique par-dessus le second détecteur (102) orienté vers celui-ci :
un mécanisme de détection de mouvement (200) configuré pour déplacer le premier détecteur (100) et le second détecteur (102), pour orienter le rayonnement optique (112) vers le second détecteur (102) et pour déplacer le second détecteur (102) afin d'effectuer un balayage de lignes ; et
un réflecteur (302, 402) et un système de déplacement de réflecteur (300, 400) configuré pour faire pivoter ou pour déplacer linéairement le réflecteur (302, 402) qui est configuré pour refléter le rayonnement optique (112) vers le second détecteur (102) dans lequel l'image en deux dimensions capturée par le premier détecteur (100) est mise au point, et dans lequel le second détecteur (102) est configuré pour effectuer une imagerie sur une seule ligne pour l'image hyperspectrale sur la base du rayonnement optique orienté vers celui-ci avec ledit état de mise au point.

2. Imageur selon la revendication 1, dans lequel le mécanisme de détection de mouvement (200) est configuré pour déplacer le second détecteur (102) dans une direction perpendiculaire à l'axe optique du rayonnement optique reçu par le second détecteur (102), dans lequel l'axe longitudinal d'une ouverture du second détecteur (102) est perpendiculaire à la direction de déplacement et à l'axe optique.

3. Imageur selon la revendication 1 ou 2, dans lequel l'ensemble d'orientation (106) comprend un séparateur de faisceau (502) configuré pour séparer le rayonnement optique vers la première direction et vers la seconde direction en même temps, dans lequel la première direction est destinée au premier détecteur (100) et la seconde direction est destinée au second détecteur (102).

4. Imageur selon la revendication 3, dans lequel l'ensemble d'orientation (106) comprend un système de déplacement de séparateur de faisceau (500), dans lequel le système de déplacement de séparateur de faisceau (500) est configuré pour déplacer le séparateur de faisceau (502) afin de balayer le rayonnement optique sur le second détecteur (102) .

5. Imageur selon la revendication 1 ou 2, dans lequel l'ensemble d'orientation (106) comprend un réflecteur (302) et un système de déplacement de réflecteur (300), dans lequel le système de déplacement de réflecteur (300) est configuré pour orienter le rayonnement optique vers la première direction et la seconde direction en même temps, dans lequel la première direction est destinée au premier détecteur (100) et la seconde direction est destinée au second détecteur (102).

6. Imageur selon la revendication 5, dans lequel le système de déplacement de réflecteur (300) est configuré pour balayer le rayonnement optique sur le second détecteur (102).

7. Imageur selon la revendication 3, dans lequel la première direction va vers le premier détecteur (100), qui est stationnaire, et la seconde direction va vers une plage de déplacement du second détecteur (102) déplacé par le mécanisme de détection de mouvement (200).

8. Imageur selon la revendication 1, dans lequel le mécanisme de détection de mouvement (200) est configuré pour déplacer le premier détecteur (100) et le second détecteur (102), et pour orienter le rayonnement optique vers le premier détecteur (100) et le second détecteur (102) à tour de rôle en déplaçant le premier détecteur (100) et le second détecteur (102) vers le rayonnement optique de manière alternée.

9. Imageur selon la revendication 1, dans lequel le dispositif de mise au point commun (110) est configuré pour effectuer au moins l'un de ce qui suit afin d'effectuer l'opération de mise au point : modifier la distance entre l'objectif commun (104) et le premier et le second détecteurs (100, 102), et modifier une longueur focale arrière de l'objectif (104).

10. Imageur selon la revendication 1, dans lequel le second détecteur (102) comprend au moins une lentille relais (700) entre l'objectif commun (104) et au moins l'un de ce qui suit : le premier détecteur (100) et le second détecteur (102) .

11. Imageur selon la revendication 1, dans lequel l'appareil comprend
un ou plusieurs processeur(s) (800) ; et
une ou plusieurs mémoire(s) (802) qui comprend/comprennent un code de programme informatique ;
dans lequel la ou les mémoire (s) (802) et le code de programme informatique sont configurés, avec le ou les processeur(s) (800), pour permettre à l'appareil au moins de :
orienter, à l'aide d'un ensemble d'orientation (106), simultanément ou à tour de rôle, le rayonnement optique (112) qui provient de l'objectif commun (104) vers le premier détecteur (100) et le second détecteur (102) ;
recevoir, entre un dispositif de mise au point commun (110) et le premier détecteur (100) et le second détecteur (102), des informations sur un état de mise au point, dans lequel l'image en deux dimensions capturée par le premier détecteur (100) est mise au point, et
capturer, à l'aide du second détecteur (102), une image à une seule ligne sur la base du rayonnement optique orienté vers celui-ci en utilisant ledit état de mise au point.

12. Procédé de fonctionnement d'un imageur hyperspectral, dans lequel le procédé comprend
l'orientation (900), par un ensemble d'orientation (106), d'un rayonnement optique (112) entre un objectif commun (104) et un premier détecteur (100) et un second détecteur (102), dans lequel l'objectif commun (104) est commun au premier détecteur (100) et au second détecteur (102) et se trouve à la même distance optique du premier détecteur (100) et du second détecteur (102), dans lequel le premier détecteur (100) capture une image en deux dimensions, et le second détecteur (102) effectue une imagerie sur une seule ligne et est déplacé spatialement par rapport au premier détecteur (100), **caractérisé par**
l'exécution d'une opération de mise au point destinée à trouver un état de mise au point et à former un plan d'image (120) de l'objectif commun (104) sur une fente (600) du spectrographe en réponse à l'état de mise au point dans lequel l'image en deux dimensions du premier détecteur (100) est mise au point, avec un dispositif de mise au point (110) commun au premier détecteur (100) et au second détecteur (102) ;
la réception (902), de la part d'un dispositif de mise au point (110) commun au premier détecteur (100) et au second détecteur (102), d'informations sur un état de mise au point, dans lequel l'image en deux dimensions capturée par le premier détecteur (100) est mise au point pour une image hyperspectrale,
la formation de l'image hyperspectrale en balayant le rayonnement optique sur le second détecteur (102) orienté vers celui-ci à l'aide d'au moins l'un de ce qui suit : un mécanisme de détection de mouvement (200) qui déplace le premier détecteur (100) et le second détecteur (102), oriente le rayonnement optique (112) vers le second détecteur (102) et déplace le second détecteur (102) afin d'effectuer un balayage de lignes, un système de déplacement de réflecteur (300, 400) qui fait pivoter ou déplace linéairement un réflecteur (302, 402) qui réfléchit le rayonnement optique vers le second détecteur (102),
et
l'exécution (904), par le second détecteur (102), de l'imagerie sur une seule ligne pour l'image hyperspectrale sur la base du rayonnement optique orienté vers celui-ci en utilisant ledit état de mise au point.
